# EUROPEAN PATENT SPECIFICATION

(11) **EP 1 733 948 B1**
(45) Date of publication and mention of the grant of the patent: **20.01.2016**
(21) Application number: 05025378.0
(22) Date of filing: 21.11.2005
(51) Int. Cl.: B62B 7/06, B62B 9/00

(54) **Locking device used in combination with frame assembly**
Verriegelungsvorrichtung zum Gebrauch in Kombination mit einer Rahmenstruktur
Dispositif de verrouillage utilisé en combinaison avec un ensemble châssis

(30) Priority: 17.06.2005 CN 200520109181 U; 06.09.2005 CN 200520105274 U
(43) Date of publication of application: 20.12.2006
(73) Proprietor: Wonderland Nurserygoods Co., Ltd., Taipei 114 (TW)
(72) Inventor: Chen, Shun-Min, Neihu Taipei 114 (TW); Li, Ru Yi, Neihu Taipei 114 (TW)
(74) Representative: Grünecker Patent- und Rechtsanwälte PartG mbB

(56) References cited:
- EP-A- 1 232 927
- EP-A- 1 564 106
- DE-U1-202005 001 296
- US-A- 2 639 162

## Description

### Field of the Invention

The present invention relates generally to a locking device used in combination with a frame assembly, and more particularly to a locking device for controlling a frame assembly of a stroller, such as an umbrella stroller, to be stretched and collapsed.

### Background of the Invention

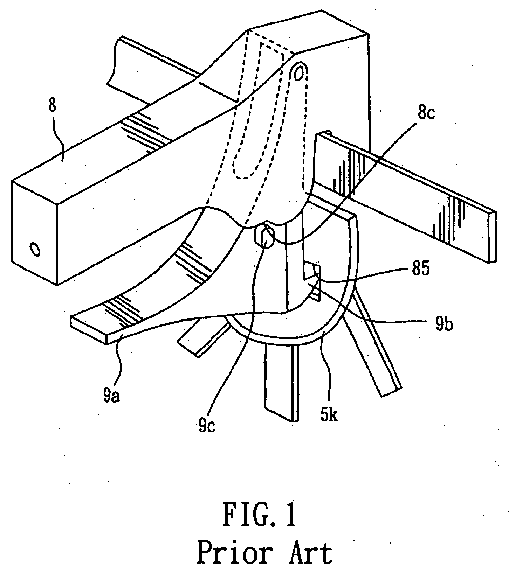

As shown in Fig. 1, a conventional locking device used in combination with a frame assembly of a stroller was disclosed in European Patent No. EP 1232927 A2. The conventional locking device includes a lever 9a at an upper end pivotally connected with a holder 8. A tooth 9b of the lever 9a at a lower end is engaged into an undercut 85 of a cursor 5k to hold the cursor 5k and simultaneously maintain the frame assembly of the stroller in a stretched state. When the frame assembly of the stroller is desired to be collapsed, the lever 9a is pivotally rotated upwardly to make the tooth 9b be disengaged from the undercut 85 so that the cursor 5k is movable and the frame can be collapsed.

However, the lever 9a and holder 8 are pivotally connected only at their upper ends so that if there is no other structure preventing them from relatively rotating, then the lever 9a will pivotally rotate toward the holder 8 because the tooth 9b of the lever 9a is subjected to the weight downward from the cursor 5k. The inclination of rotation may release tooth 9b from undercut 85 of the cursor 5k and thus cannot make the frame assembly maintain in a stretched state.

When structures, such as a notch 8c and button 9c, for hindering the lever 9a from being rotated relative to the holder 8 are provided, if engaging moment between button 9c and notch 8c is larger than that resulting from weight of the cursor 5k, then the frame assembly will be firmly maintained in stretched state. On the other hand, when the frame assembly of the stroller is desired to be collapsed, the lever 9a will be difficult to be pivotally rotated toward the holder 8 due to firm engagement of the button 9c in the undercut 85. This situation makes the tooth 9b hard to be disengaged from the undercut 85 of the cursor 5k and thus the object for the frame assembly to be collapsed cannot be obtained.

If a larger force is exerted on the lever 9a to overcome engaging moment between button 9c and notch 8c to make the frame assembly of stroller be forcibly collapsed, the region near notch 8c and button 9c will be seriously worn. After the frame assembly is repeatedly collapsed, engagement between button 9c and notch 8c will become unstable due to frequent wearing. In view of this structural shortcoming, children in the stroller may be clamped and hurt by accidentally collapsed frame assembly.

Therefore, in conventional locking device, in addition to engagement of tooth 9b with undercut 85, button 9c and notch 8c are also necessary structures for maintaining the frame assembly in a stretched state. However, for button 9c and notch 8c, they are difficult in use for collapsing the frame assembly because a large force must be applied to lever 9a. Besides, for button 9c and notch 8c, they might be worn owing to frequently use such that engagement therebetween is unsteady and hence the child in the stroller will be suffered from potential hurt.

Furthermore, because the conventional locking device does not have safety lock, the frame assembly might probably be collapsed unexpectedly and the child in the stroller will be hurt when another child outside the stroller plays with the locking device or an adult mistakenly operates the frame assembly.

### Summary of the Invention

Accordingly, the present invention relates to a locking device that is substantially intended to obviate one or more of the problems due to the limitations and disadvantages encountered in the prior art.

In view of above descriptions, one object of the present invention is to provide a locking device used in combination with a frame assembly which is easily collapsed and stretched.

Another object of the present invention is to provide a locking device used in combination with a frame assembly in which frictional wear hardly occurs.

Yet another object of the present invention is to provide a locking device used in combination with a firmly lockable frame assembly.

A further object of the present invention is to provide a locking device used in combination with a frame assembly which can be used to change the frame assembly in either stretched state or collapsed state through a rotation operation rather than a press operation.

A yet object of the present invention is to provide a locking device used in combination with a frame assembly which is equipped with a safety lock.

Another object of the present invention is to provide a stroller equipped with a locking device easily collapsing and stretching a frame assembly of the stroller as well as firmly locking the frame assembly, and hardly worn out.

Additional features and advantages of the invention will be set forth in the description which follows, and in portion will be apparent from the description, or may be learned by practice of the invention. The objectives and advantages of the invention will be realized and attained by the structure as particularly set forth in the written description and claims as well as illustrated in the appended drawings.

To achieve these and other advantages and according to the purpose of the present invention, as embodied and broadly described, the present invention provides a locking device in combination with a frame assembly according to claim 1.

Moreover, the guiding pole is fixed with the handle; when the handle is rotated, the first elastic piece is rotated together with the guiding pole.

It is another preferred feature that the slider further has a shoulder which defines the recess and is used to prevent the slider from being slid along the guiding pole.

Furthermore, the slider further has a chase formed adjacent to the shoulder and in spatial communication with the recess, whereby the first bump can be removed through the chase from the recess.

Additionally, the slider further has a first slope on the shoulder and opposite to the recess.

It is preferred that the frame assembly is further provided with a third rod, and the locking device further comprises a pedal assembly which is mounted with the guiding pole and pivotally connected with the third rod.

It is preferred that the pedal assembly includes a pedal support and a collar rotatably received within the pedal support, wherein the third rod is pivotally connected with the pedal support and the guiding pole is fixed to the collar.

It is preferred that the pedal assembly further includes a second elastic piece which is connected to the guiding pole and the pedal support.

It is preferred that the pedal assembly further includes a second elastic piece which is used to recover the guiding pole and a plug which is fixed to the pedal support.

It is preferred that the locking device further comprises a locking block which is slidablely connected with the guiding pole and thus is optionally engaged with base; wherein the locking block can prevent the guiding pole from being rotated relative to the slider when the locking block is engaged with the base.

It is preferred that the locking device further comprises a slide which is slidably accepted within the handle and is fixed with the locking block; wherein the locking block is disengaged from the base when the slide is moved.

It is preferred that the locking device further comprises a fourth elastic piece which is mounted with the slide in order to recover the slide.

It is preferred that the base has a gutter and the locking block has a latch; wherein the locking block is engaged with the base when the latch is accommodated within the gutter.

It is preferred that the locking device further comprises a bush which is slidably connected with the guiding pole and has a cam surface; wherein the handle has a bulge which is contacted with the cam surface.

It is preferred that the bush further has a larger diameter portion on which the cam surface is formed and a smaller diameter portion extending from the larger diameter portion; wherein the first elastic piece further includes a second bump which is protruded out of the guiding pole and is positioned adjacent to an end of the smaller diameter portion; wherein when the handle is rotated, the bush is slid along the guiding pole due to cooperation of the bulge and then the second bump is moved into the guiding pole by the bush so as to cooperate the first bump into the guiding pole and thus allow the slider being slid along the guiding pole.

It is preferred that the handle has an annular portion and a lateral flute formed on the annular portion; the bush further has a longitudinal channel; the locking device further comprises a pin which is passed through the base, the flute, the channel and the guiding pole.

It is preferred that the locking device further comprises a third elastic piece for recovering the guiding pole.

It is preferred that the slider further has a shoulder which defines the recess and is used to prevent the slider from being slid along the guiding pole.

It is preferred that the slider further has a first slope on the shoulder and opposite to the recess.

It is preferred that the frame assembly is further provided with a third rod, and the locking device further comprises a pedal assembly which is mounted with the guiding pole and pivotally connected with the third rod.

Another aspect of the present invention relates to a locking device used in combination with a frame assembly. The frame assembly is provided with a first rod and a second rod. The locking device comprises: a base pivotally connected with the first rod; a slider pivotally connected with the second rod; and a guiding pole partially received within the base and the slider; the locking device being characterized by that the slider has a shoulder; and the locking device further comprises a first retaining piece which includes a first bump being situated outside the guiding pole and blocking the slider at the shoulder so as to keep the frame assembly in a stretched state, whereby, when the guiding pole is rotated, the first bump of the retaining piece is released from the shoulder of the slider in order to allow the slider being slid along the guiding pole so as to collapse the frame assembly.

It is preferred that the retaining piece is an elastic piece which is partially received within the guiding pole.

The frame assembly is further provided with a strut which is pivotally connected with the first rod and the second rod.

It is preferred that the slider further has a chase formed adjacent to the shoulder, whereby the first bump can be released through the chase from the shoulder.

It is preferred that the locking device further comprises a locking block which is slidablely connected with the guiding pole and thus is optionally engaged with base; wherein the locking block can prevent the guiding pole from being rotated relative to the slider when the locking block is engaged with the base.

It is preferred that the locking device further comprises a handle secured to the guiding pole and a slide which is slidably accepted within the handle and is fixed with the locking block; wherein the locking block is disengaged from the base when the slide is moved.

Yet another aspect of the present invention relates to a locking device used in combination with a frame assembly. The frame assembly is provided with a first rod and a second rod. The locking device comprises: a base pivotally connected with the first rod; a slider pivotally connected with the second rod; and a guiding pole partially received within the base and the slider; the locking device being characterized by that the slider has a shoulder; and the locking device further comprises: a first elastic piece which includes a first bump protruding out of the guiding pole and blocking the slider at the shoulder so as to keep the frame assembly in a stretched state; and a bush slidably connected with the guiding pole and adjacent to the first elastic piece; whereby when the bush is moved relative to the guiding pole, the first bump of the first elastic piece is released from the shoulder of the slider in order to allow the slider being slid along the guiding pole so as to collapse the frame assembly.

It is preferred that the bush has a second slope and the first elastic piece further includes a second bump which is adjacent to the second slope, whereby when the bush is moved relative to the guiding pole, the first bump is cooperated by the second bump and moved into the guiding pole so that the first elastic piece is released from the shoulder of the slider.

The frame assembly is further provided with a strut which is pivotally connected with the first rod and the second rod.

It is preferred that the bush has a cam surface; the locking device further comprises a handle which is connected with the guiding pole and has a bulge contacted with the cam surface; whereby when the handle is rotated, the bugle is moved on the cam surface and the bush is slid along the guiding pole.

It is preferred that the handle has an annular portion and a lateral flute formed on the annular portion; the bush further has a longitudinal channel; the locking device further comprises a pin which is passed through the base, the flute, the channel and the guiding pole.

It is to be understood that both the forgoing general description and the following detailed description are exemplary and explanatory and are intended to provide a further non-limiting explanation of the invention as claimed.

### Brief Description of the Drawings

The accompanying drawings, which are included to provide a further understanding of the invention and are incorporated in and constitute a portion of the specification, illustrate embodiments of the invention and together with the description serve to explain the principle of the invention. In the drawings:
Fig. 1 is a schematic view showing a conventional locking device;
Fig. 2 is an exploded perspective view of the locking device of the first preferred embodiment according to the present invention;
Fig. 3 is an assembled perspective view showing that the locking device of the first preferred embodiment according to the present invention is mounted to a frame assembly in a stretched state, wherein the locking device is partial sectioned;
Fig. 4 is a sectional perspective view of the slider shown in Fig. 2;
Fig. 5 is an assembled perspective view similar to Fig. 3, which shows that a frame assembly is in a half-collapsed state when a handle is rotated about 90 degrees, wherein the locking device is partially sectioned;
Fig. 6 is an assembled perspective view similar to Fig. 3, which shows that a frame assembly is in a collapsed state when a handle is reversed to its original orientation;
Fig. 7 is an exploded perspective view similar to Fig. 2, which shows that a locking device is provided with a safety lock;
Fig. 8 is an assembled perspective view similar to Fig. 3, which shows that a locking device is provided with a safety lock;
Fig. 9 is a partially sectional view of the locking device provided with a safety lock which is shown in Fig. 8;
Fig. 10 is a partially sectional view of a locking block shown in Fig. 9 which is engaged with a base;
Fig. 11 is a top view of Fig. 10;
Fig. 12 is a partially sectional view of a locking block shown in Fig. 9 which is moved downwards so as to be disengaged from a base and then is rotated about 90 degrees;
Fig. 13 is a top view of Fig. 12;
Fig. 14 is an assembled perspective view similar to Fig. 8, which shows that a frame assembly is in a half-collapsed state when a handle is rotated about 90 degrees, wherein the locking device is partially sectioned;
Fig. 15 is an assembled perspective view similar to Fig. 8, which shows that a frame assembly is in a collapsed state when a handle is reversed to its original orientation;
Fig. 16 is an exploded perspective view of the locking device of the second preferred embodiment according to the present invention;
Fig. 17 is cross-sectional bottom view taken along the flute of the handle shown in Fig. 16;
Fig. 18 is an assembled perspective view showing that the locking device of the second preferred embodiment according to the present invention is mounted with a frame assembly in a stretched state;
Fig. 19 is an assembled perspective view similar to Fig. 18 which shows that a handle is rotated about 90 degrees and thus a bush is descended thereby.
Fig. 20 is an assembled perspective view similar to Fig. 18 which shows that the frame assembly is in collapsed state.

### Detailed Description of the Invention

### Structures of the locking device of the first preferred embodiment

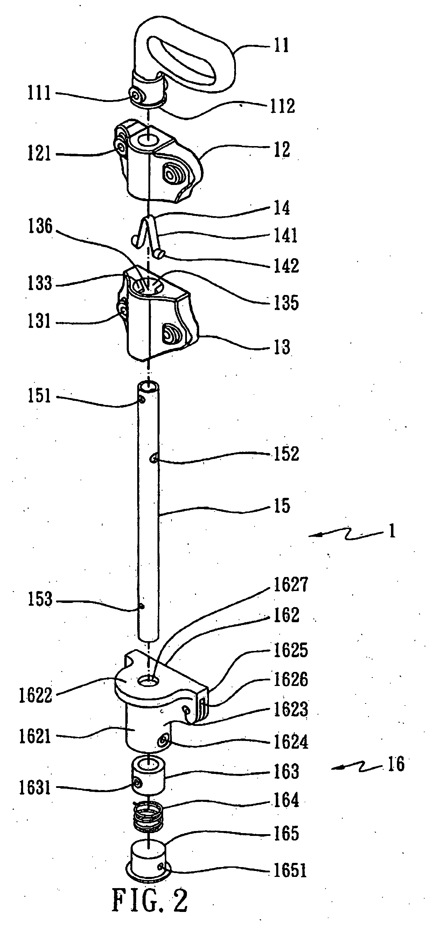

As shown in Figs. 2, 3 and 4, a locking device 1 used in combination with a frame unit 3, for example a frame unit of a stroller, according to the first preferred embodiment of the present invention comprises a handle 11, a base 12, a slider 13, a first elastic piece (or retaining piece) 14, a hollow guiding pole 15 and a pedal assembly 16.

The handle 11 includes a first central hole 112 formed at bottom thereof, and an aperture 111 situated at sidewall of the handle 11 and in communication with the first central hole 112.

The base 12 includes a longitudinal third central hole, and two first pivoting holes 121 respectively situated at two opposite sides of the third central hole.

The slider 13 includes a longitudinal fourth central hole 136, two second pivoting holes 131 respectively situated at two opposite sides of the fourth central hole 136, four ribs 137 extending inwards from inner wall of the fourth central hole 136, two shoulders 134 situated near top end of the fourth central hole 136, two recesses 132 defined by the shoulders 134 and the ribs 137, two first slopes 133 respectively formed on top surfaces of the two shoulders 134, and two chases 135 formed between the two shoulders 134. Each chase 135 is in spatial communication with the recesses 132 and the fourth central hole 136.

The first elastic piece 14 includes a V-shaped elastic body 141, and two first bumps 142 oppositely extending respectively from two free ends of the elastic body 141.

The guiding pole 15 includes a first mounting hole 151 formed near top end thereof, a second mounting hole 153 near bottom end thereof, and two opposite first orifices 152 between the first mounting hole 151 and the second mounting hole 153.

The pedal assembly 16 includes a pedal support 162, a collar 163, a second elastic piece 164 such as a torsion spring, and a plug 165.

The pedal support 162 has an hub 1621, a plate 1622 perpendicularly extending from top end of the hub 1621, a perforation 1627 formed on the plate 1622, a sheet 1625 perpendicularly extending from the plate 1622, a groove 1626 formed in the sheet 1625, two third pivoting holes 1623 respectively formed on two sides of the sheet 1625, and a third mounting hole 1624 laterally formed through the hub 1621.

A collar 163 has a fourth mounting hole 1631 formed on its wall.

A plug 165 has a fifth mounting hole 1651 formed on its wall.

### Process for assembling the locking device of the first preferred embodiment

Firstly, the first elastic piece 14 is put into the guiding pole 15 and then the two first bumps 142 are protruded out of the first orifices 152 via restoring force of the first elastic piece 14. Secondly, the guiding pole 15 with top end thereof is inserted into the first central hole 112 of the handle 11, and then both the guiding pole 15 and the handle 11 are fixed together by passing a pivotal piece (not show), such as a rivet or a bolt, through the aperture 111 of the handle 11 and the first mounting hole 151 of the guiding pole 15.

Next, the guiding pole 15 with bottom end thereof is passed through the third central hole of the base 12 and the fourth central hole 136 of the slider 13 sequentially. When the first bumps 142 of the first elastic piece 14 are moved with the guiding pole 15 to the fourth central hole 136 of the slider 13, the first bumps 142 are pressed into the guiding pole 15 by the slider 13. When the first bumps 142 are continually moved with the guiding pole 15 and reach the recesses 132 of the slides 13, the first bumps 142 protrude out of the guiding pole 15 again due to restoration force of the elastic body 141 and then are received in the recesses 132 of the slider 13. When the first bumps 142 are longitudinally aligned with the shoulders 134, the guiding pole 15 is limited its movement by the slider 13, which also makes the base 12 incapable of being released from the guiding pole 15. If the handle 11 is rotated so as to cooperate the guiding pole 15 to the extent that the first bumps 142 are longitudinally aligned with the chases 135, then the slider 13 can be slid downwards along the guiding pole 15.

After that, the bottom end of the guiding pole 15 is passed through the hub 1621 of the pedal support 162 and then received in the collar 163. A pivoting piece (not shown) is used to penetrate into the fourth mounting hole 1631 of the collar 163 and the second mounting hole 153 of the guiding pole 15 in order to fix the collar 163 with the guiding pole 15. Subsequently, the bottom end of the guiding pole 15 is moved upwards into the hub 1621 of the pedal support 162 till the collar 163 is against bottom surface of the plate 1622. Next, the second elastic piece 164 is installed between the hub 1621 and the guiding pole 15. In the meanwhile, one end of the second elastic piece 164 is fixed to the hub 1621 and the other end is fixed to the guiding pole 15. In an alternative embodiment, the other end of the second elastic piece 164 may be fixed to the collar 163. Finally, the plug 165 is inserted into the lower end of the hub 1621 and then fixed to pedal support 162 by passing a pivoting piece through the third mounting hole 1624 of the pedal support 162 and the fifth mounting hole 1651 of the plug 165.

From steps described above, it is clear that the guiding pole 15 and the collar 163 are fixed together. Similarly, the plug 165 and the pedal support 162 are fixed together. Therefore, the former subassembly can be rotated relative to the latter subassembly. However, because the collar 163 has an outer diameter larger than the inner diameter of the perforation 1627 on the pedal support 162, the guiding pole 15 is therefore unable to be slid relative to the pedal assembly 16 or released from the pedal assembly 16.

### Structures of the frame assembly

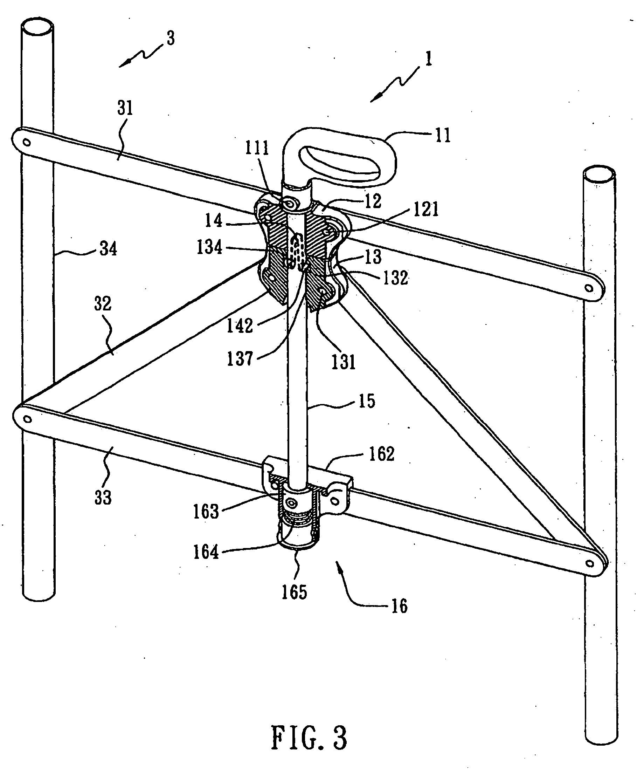

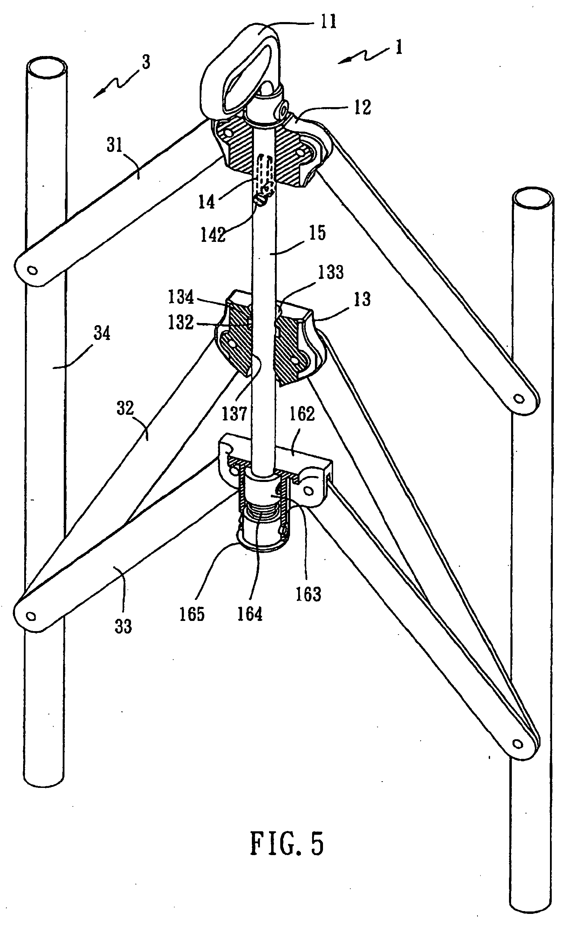

In Figs. 3 and 5, only a part of the frame assembly 3 according to the invention is shown, which comprises two struts 34 respectively situated at two sides thereof, as well as two first rods 31, two second rods 32 and two third rods 33 respectively connected with the two struts 34. The frame assembly 3 of the invention may be used as the frame of a stroller. In addition, so called "rod" mentioned in this invention may be solid, partially hollow, or hollow entirely.

### Process for mounting the locking device to the frame assembly

As shown in Figs. 2,3 and 4, one end of each first rod 31 is pivotally connected with the base 12 at the first pivoting hole 121 by a pivoting piece (not shown) and the other end of each first rod 31 is pivotally connected with the strut 34. Next, one end of each second rod 32 is pivotally connected with the slider 13 at the second pivoting hole 131 and the other end of each first rod 31 is pivotally connected with the strut 34. Sequentially, one end of each third rods 33 is inserted into the groove 1626 of the pedal support 162 from the side thereof, and then the third rods 33 are pivotally connected with the pedal support 162 by passing pivoting pieces through the third mounting holes 1623 and the third rods 33. Finally, the other ends of the two second rods 32 and those of the two third rod 33 are respectively pivotally connected with the two struts 34 to form the frame assembly 3 shown in Fig. 3, which illustrates a stretched state with two struts 34 being separated farther.

### Operation of the locking device together with the frame assembly

As shown in Figs. 2,4 and 5, when it is desired to collapse the frame assembly 3, the handle 11 is rotated to cooperate the guiding pole 15 being also rotated to the extent that the first bumps 142 of the first elastic piece 14 are aligned with the chases 135 of the slider 13. The rotation of the guiding pole 15 torsionally deforms the second elastic piece 164 at the same time. Because the guiding pole 15 cannot be released from the pedal support 162, hence the pedal support 162 will be moved upwards together with the handle 11 and the guiding pole 15 when the handle 11 together with the guiding pole 15 are pulled upwards at that situation. Being different from the pedal support 162, the slider 13 can be moved and slid relative to the guiding pole 15 so that the slider 13 will not be moved upwards with the handle 11 and guiding pole 15. In other words, the slider 13 will be slid downwards along the guiding pole 15 and depart from the base 12 in order to pivotally rotate the rods 31, 32 and 33 of the frame assembly 3 as a half-collapsed state shown in Fig. 5. On the other hand, although the base 12 can also be slid and rotated relative to the guiding pole 15, the base 12, however, is blocked by the handle 11 and the first bumps 142 of the first elastic piece 14 so that the base 12 can only be moved in a small range between the handle 11 and the first bumps 142.

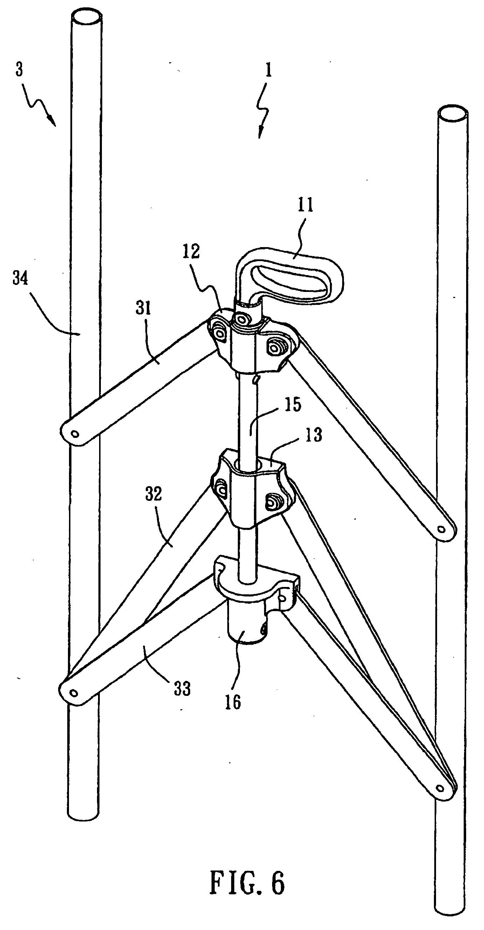

When a user departs his hand from the handle 11, the guiding pole 15 and handle 11 are reversely rotated to original orientation as shown in Fig. 6 by restoration force of the second elastic piece 164. Accordingly, the first bumps 142 are longitudinally aligned with the shoulders 134 of the slider 13 again. At this time, the two struts 34 of the frame assembly 3 are closed to each other to a collapsed state.

If it is desired to stretch the frame assembly 3 again, the user can hold the struts 34 with his hands and then step upon the plate 1622 of the pedal support 162 with his foot to make the slider 13 be slid upwards along the guiding pole 15. Due to the first slope 133 on the top end of the slider 13 and incline planes on the bottom ends of the first bumps 142, the first bumps 142 can be easily pressed into the guiding pole 15 by the slider 13 to allow slider being continually slid upwards. After the first bumps 142 are traveled across the shoulders 134, the first bumps 142 protrude out of the guiding pole 15 again and then are adapted in the recesses 132 of the slider 13 due to restoration force. In this situation, because the first bumps 142 are blocked by the shoulders 134, the frame assembly 3 can be remained in a stretched state as shown in Fig. 3.

In an alternative example of the first elastic piece 14, the first elastic piece 14 may be substituted by a retaining piece 14 with different shape, such as an annulus with two first bumps 142. The annulus is positioned around the guiding pole 15 to make the first bumps 142 be situated outside the guiding pole 15. In another alternative example of the retaining piece 14, the retaining piece 14 may be just a stake. The stake is inserted into the first orifice 152 of the guiding pole 15 and two opposite ends of the stake is left outside the guiding pole 15 as the bumps 142.

In above two examples, elasticity is unnecessary for the annulus or the stake. Hence, when the frame assembly 3 is desired to stretch again, the handle 11 has to be rotated first to the extent that the bumps 142 are aligned with the chases 135 so as to allow the slider 13 be slid upwards. After the slider 13 is adjacent to the base 12, the guiding pole 15 and the handle 11 is reversed by the second elastic piece 164 to the extent that the bumps 142 are received in the recesses 132.

Besides, the handle 11 may be integrally formed with the guiding pole 15 or be a part of the guiding pole 15.

### Structures of the locking device of the first preferred embodiment provided with a safety lock

For the sake of conforming with statutory provisions in some countries or further enhancing safety of the locking device 1, the locking device 1 of the first preferred embodiment described above can be slightly modified to include a safety lock. Therefore, only the structures changed will be described hereinafter, and those unchanged will not be reiterated.

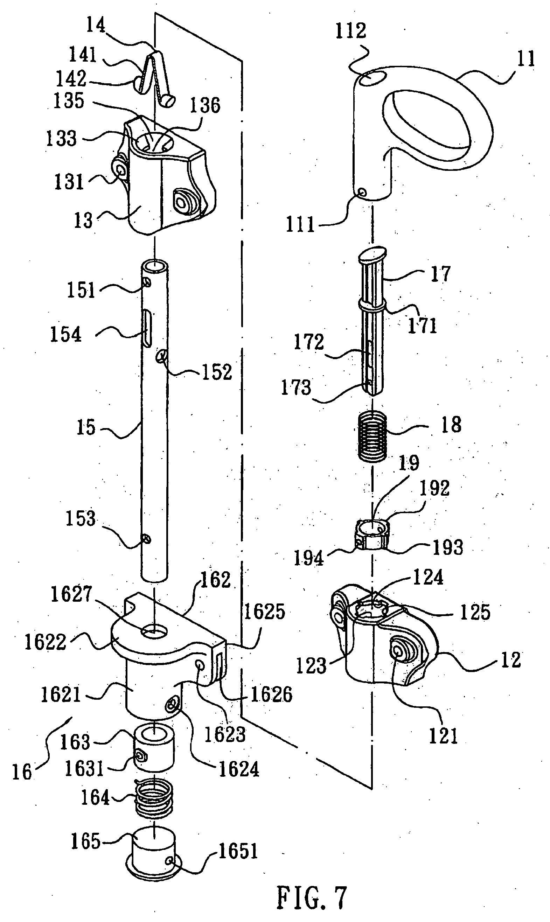

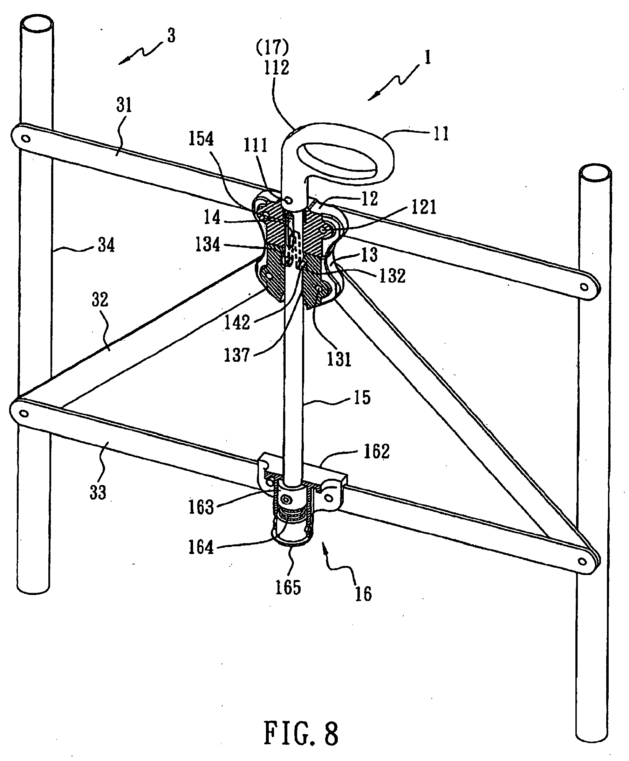

As shown in Figs. 7, 8 and 9, the locking device 1 provided with a safety lock according to the first preferred embodiment of the invention comprises a handle 11, an elongate slide 17, a fourth elastic piece 18, an annular locking block 19, a base 12, a slider 13, a first elastic piece 14, a hollow guiding pole 15 and a pedal assembly 16.

The handle 11 includes a first central hole 112 longitudinally penetrating through the handle 11 and an aperture 111 formed on sidewall thereof.

The slide 17 from top to bottom has a flange 171, a first slit 172 and a first securing hole 173.

The locking block 19 includes a longitudinal second central hole, a pair of larger first latches 192 and a pair of smaller second latches 193 all of which extend outwards from annular surface of the locking block 19, and a second securing hole 194 through the first latches 192.

The base 12 includes two first pivoting holes 121 respectively situated two sides thereof, a longitudinal third central hole, four ledges 123 situated at top end of the base 12 and radically extending from inner surface which defines the third central hole, and a pair of wider first gutters 124 as well as a pair of narrower second gutters 125 all of which are defined between the ledges 123.

The guiding pole 15 further includes a pair of slots 154 between the first mounting hole 154 and the first orifice 152.

### Processes for assembling the locking device with a safety lock

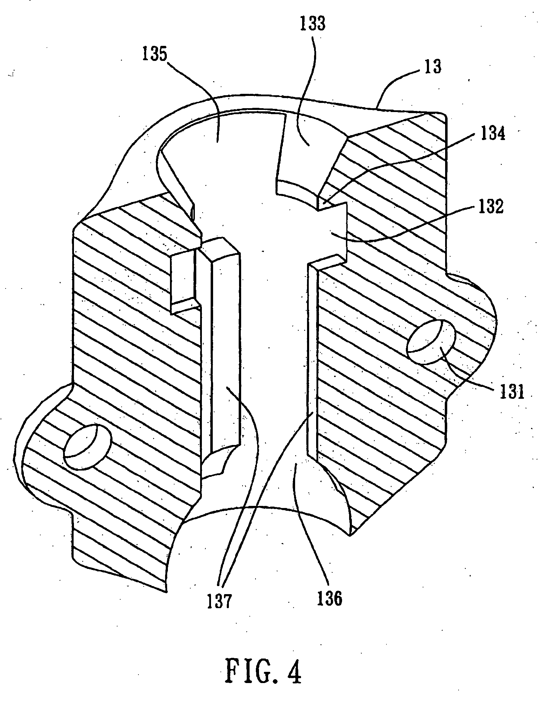

As shown in Figs. 4, 7, 8 and 9, firstly the first elastic piece 14 is put into the guiding pole 15 and then the first bumps 142 are snapped out of the first orifices 152 of the guiding pole 15 due to restoration force of the first elastic piece 14. Next, the lower half section of the slide 17 is accommodated within the fourth elastic piece 18. Thereafter, the fourth elastic piece 18 and lower section of the slide 17 are inserted into the guiding pole 15 from its top end, and then the upper section of the slide 17 together with the top end of the guiding pole 15 are inserted into the first central hole 112 of the handle 11 from its bottom end. After that, the handle 11, the guiding pole 15 and the slide 17 are connected together by passing a pivoting piece, such as a rivet or bolt, through the aperture 111 of the handle 11, the first mounting hole 151 of the guiding pole 15, and the first slit 172 of the slide 17 such that the fourth elastic piece 18 is abutted at two end thereof respectively against the pivoting piece and the flange 171 of the slide 17.

Next, the guiding pole 15 is received in the locking block 19, whereupon the locking block 19, the guiding pole 15 and the slide 17 are connected together by passing a pivoting piece, such as a rivet or bolt, through the second securing hole 194 of the locking block 19, the slot 154 of the guiding pole 15 and the first securing hole 173 of the slide 17.

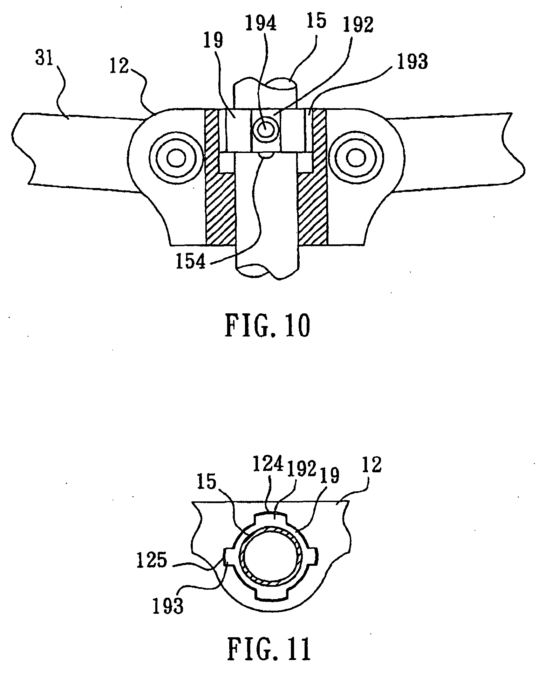

Subsequently, the guiding pole 15 with lower end thereof is passed through the third central hole of the base 12. As shown in Figs. 10 and 11, when the locking block 19 is approached to the base 12, they are relatively rotated to the extent that the first latches 192 and the second latches 193 of the locking block 19 are respectively aligned with the first gutters 124 and the second gutters 125 of the base 12 so as to enable the first latches 192 and the second latches 193 to be accepted respectively within the first gutters 124 and the second gutters 125, which makes the locking block 19 be restricted by the ledges 123 of the base 12 and cannot be rotated.

The steps for the guiding pole 15 being mounting to the slider 13 and the pedal assembly 16 are the same with those in the first preferred embodiment without the safety lock so that the related descriptions will be omitted.

### Operation of the locking device with the safety lock together with the frame assembly

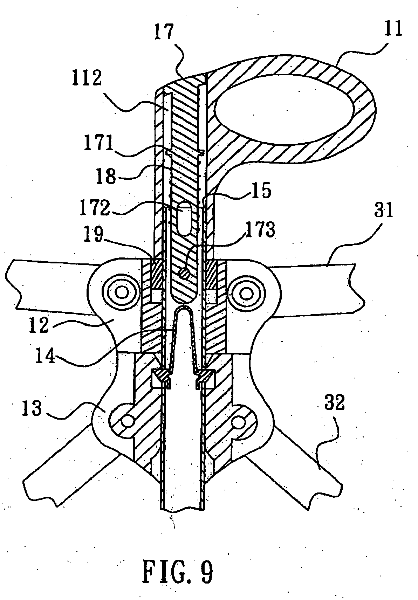

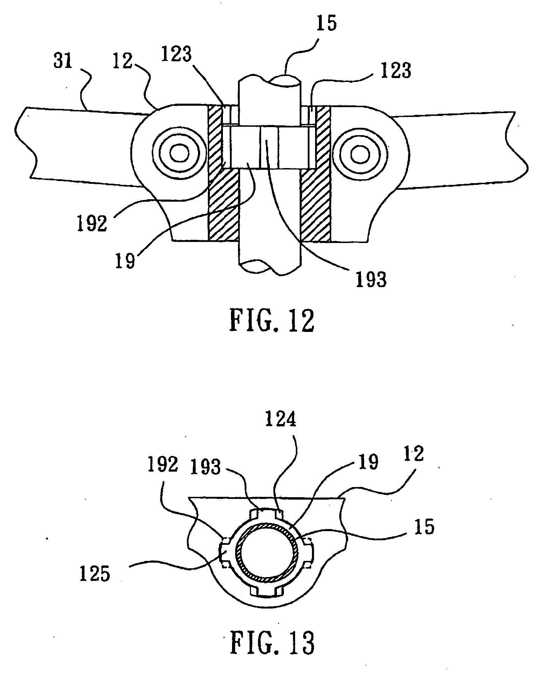

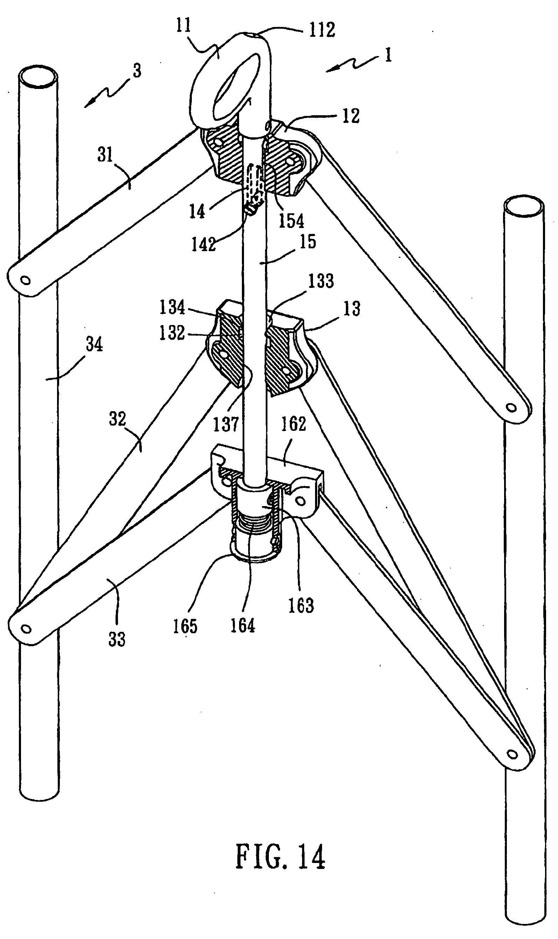

As shown in Figs. 9, 12, 13 and 14, if it is desired to collapse the frame assembly 3, firstly, the slide 17 is pressed by a hand and the locking block 19 is cooperated downwards to release the locking block 19 from the ledges 123 so as to allow the locking block 19 together with guiding pole 15 and handle 11 being rotated relative to the base 12 and the slider 13. At this time, the handle 11 is further rotated by the same hand and the guiding pole 15 is cooperated and rotated to tortionally deform the second elastic piece 164. When rotation (about 90 degrees in this embodiment) is continually performed to the extent that the first bumps 142 of the first elastic piece 14 are aligned with the chases 135 (Fig. 4) of the slider 13, the handle 11 together with the guiding pole 15 are pulled upwards. Because the larger first latches 192 are under the narrower second gutters 125 at this time, thus the first latches 192 cannot be passed through the second gutters 125 so that the base 12 will be cooperated and moved upwards by the locking block 19 when the locking block 19 together with the handle 11 and guiding pole 15 are moved upwards, which pivotally rotate the first rods 31 of the frame assembly 3. On the other hand, because the pedal support 162 can only be rotated but cannot be slid relative to the guiding pole 15, therefore the pedal support 162 can also be moved upwards with the handle 11 as well as the guiding pole 15 in order to pivotally rotate the third rods 33 of the frame assembly 3. However, since the slider 13 can be slid along the guiding pole 15, the slider 13 would not be moved upwards with the handle 11 and guiding pole 15. In other words, the slider 13 will be slid downwards along the guiding pole 15 and depart away from the base 12 in order to pivotally rotate the second rods 62 of the frame assembly 3 and make the frame assembly 3 be half collapsed as shown in Fig. 10.

When the slide 17 is no more pressed by the hand of a user, the slider 17 will be moved back upwards by restoration force of the fourth elastic piece 18. At this time, if the handle 11 is still in the state of being rotated about 90 degrees, then the greater first latches 192 are still under the narrower second gutters 125 so that the slide 17 is not fully moved back to its original position.

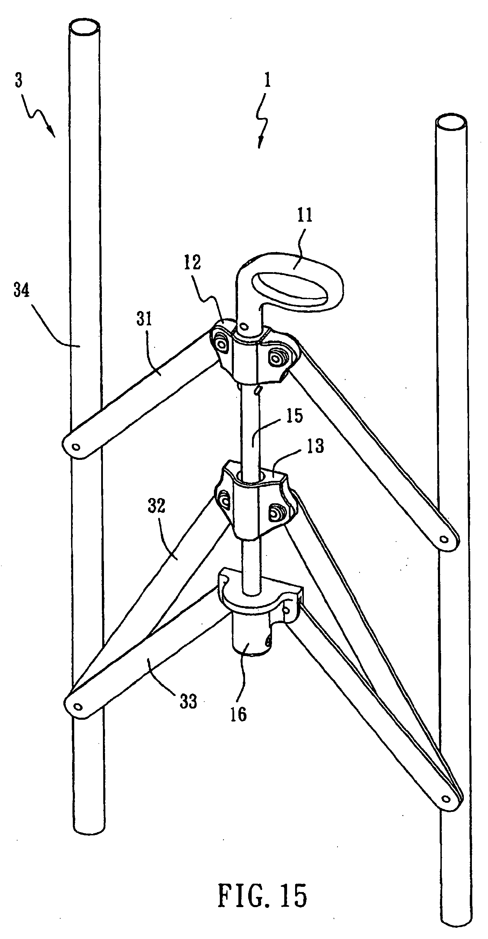

When the handle 11 is no more rotated by the hand of a user, the guiding pole 15 and handle 11 will be reversed to their original orientations as shown in Fig. 15 by restoration force of the second elastic piece 164. At this time, the greater first latches 192 are again aligned with the wider first gutters 124 as shown in Figs. 10 and 11 so that the slide 17 can be fully moved back to its original position. At the same time, the first bumps 142 of the first elastic piece 14 are longitudinally aligned with the shoulders 134 of the slider 13 again. The two struts 34 are adjacent with each other to make the frame assembly 3 in a collapsed state. Although the base 12 can be again moved along the guiding pole 15, the base 12 can only be moved in a small range between the handle 11 and the first bumps 142 because the base 12 is still obstructed by them.

In view of above description about collapsing steps, it is apparent for those having common knowledge in the art that when it is desired to collapse the frame assembly 3, if the handle 11 is rotated directly rather than the slide 17 is pressed in advance, the locking block 19, guiding pole 15, and handle 11 would not be able to be rotated relative to the base 12 and slider 13 because the locking block 19 is urged by the fourth elastic piece 18 to always keep the first latches 192 and the second latches 194 being accepted respectively within the first gutters 124 and the second gutters 125, that is, both the first latches 192 and the second latches 194 being obstructed by the ledges 123 of the base 12. Since the first bumps 142 are not aligned with the chases 135, the frame assembly 3 cannot be collapsed. Therefore, the locking block 19 together with the slide 17 and the fourth elastic piece 18 can function as a safety lock.

The steps for stretching the frame assembly 3 again are the same with those in the first preferred embodiment without the safety lock so that the related descriptions will be omitted.

### Structures of the locking device of the second preferred embodiment

The similar or correspondent structures in the second and first preferred embodiments will be named the same but numbered differently.

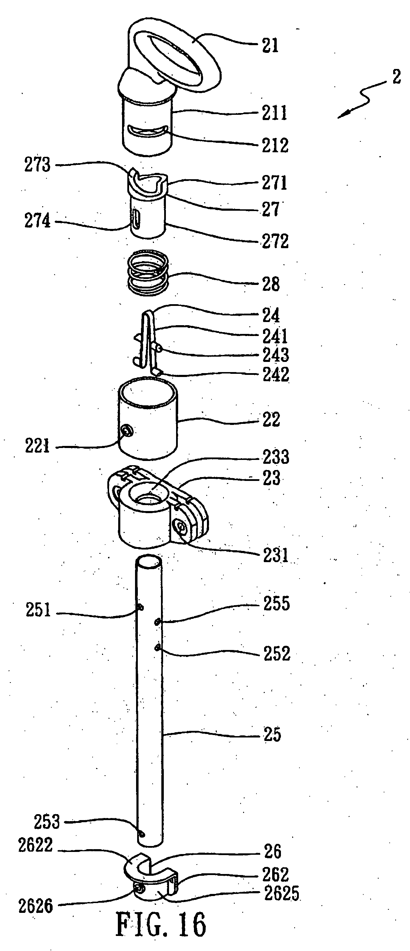

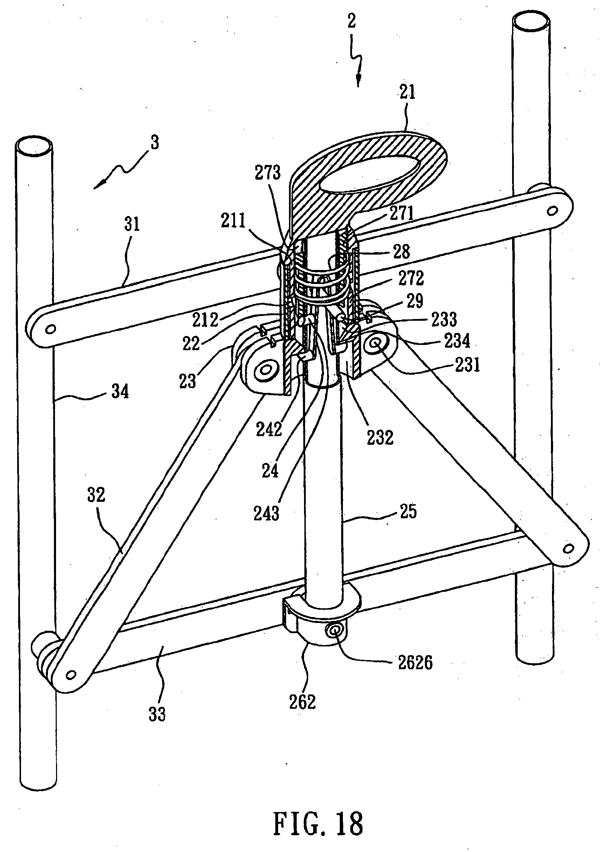

As shown in Figs. 16, 17 and 18, a locking device 2 used in combination with a frame unit 3 according to the second preferred embodiment of the present invention comprises a handle 21, a bush 27, a first elastic piece 24, a cylindrical base 22, a slider 23, a hollow guiding pole 25, a pedal assembly 26, a third elastic piece 28, and a pin 29 (Fig. 18).

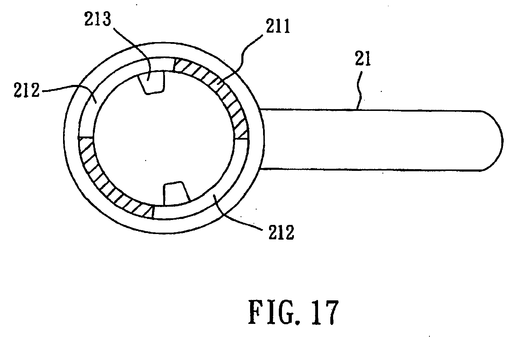

The handle 21 includes an annular portion 211 situated at lower section thereof, two flutes 212 symmetrically formed on the annular portion 211, and two bulges 213 (Fig. 17) extending away from an inner bottom surface of the annular portion 211.

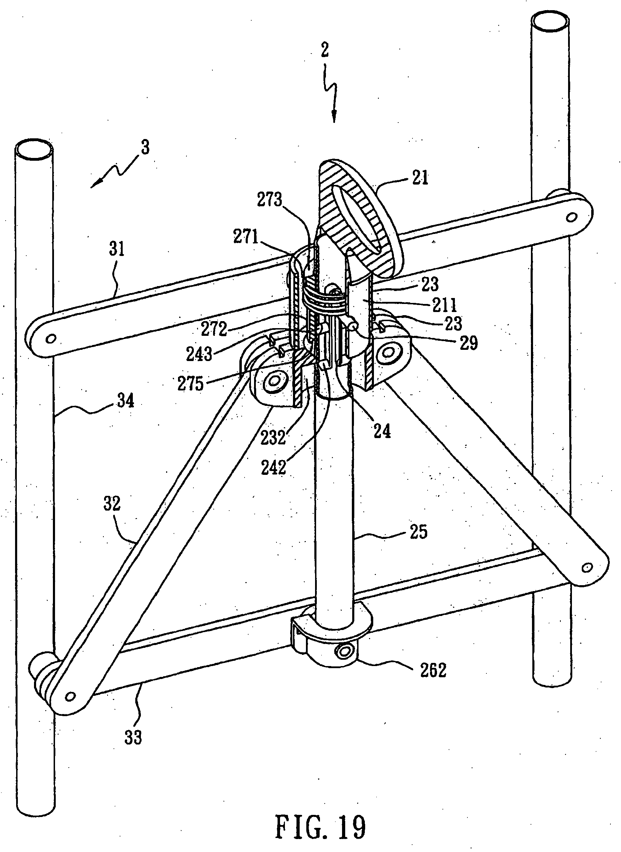

The bush 27 includes a larger diameter portion 271 situated on the upper section thereof, a smaller diameter portion 272 situated On the lower section thereof, two cam surface 273 symmetrically formed on the top surface of larger diameter portion 271, a pair of channels 274 formed on the sidewall of the smaller diameter portion 272, and a second slope 275 (Fig. 19) on the bottom surface of the smaller diameter portion 272.

The first elastic piece 24 includes a V-shaped elastic body 241, two first bumps 242 laterally extending respectively away from two free ends of the elastic body 241, and two second bumps 243 laterally extending respectively away from middle section of the elastic body 241.

The base 22 includes a longitudinal third central hole, and a pair of first pivoting holes 221 formed on sidewall of the base 22.

The slider 23 includes a longitudinal fourth central hole, two second pivoting hole 231 respectively situated on two sides of the fourth central hole, a recess 232 (Fig. 18) formed within the slider 23 and in spatial communication with the fourth central hole, a first slope 233 extending downwards and inwards from top surface of the slider 23, and a shoulder 234 between the first slope 233 and the recess 232.

The guiding pole 25 includes a first mounting hole 251 formed in upper section of the guiding pole 25, a second mounting hole 253 formed in lower section, and a pair of first orifices 252 as well as a pair of second orifices 255 in middle section.

The pedal assembly 26 includes a pedal support 262. The pedal support 262 has an arched support 2625, a plate 2622 perpendicularly extending from top end of the arched support 2625, and a fourth pivoting hole 2626 formed in the sidewall of the arched support 2625.

### Process for assembling the locking device of the second preferred embodiment

Firstly, the first elastic piece 24 is put into the guiding pole 25 to the extent that the first bumps 242 protrude out of the first orifices 252 and the second bumps 242 protrude out of the second orifices 255.

Next, the annular portion 211 of the handle 21 is put into the third central hole of the base 22. Then the bush 27 is put into the annular portion 211 of the handle 21. Subsequently, the third elastic piece 28 is received between the smaller diameter portion 272 of the bush 27 and the annular portion 211. After the guiding pole 25 with its upper section is inserted into the bush 27, a pin 29 such as a rivet is passed through the first pivoting hole 221 of the base 22, the flute 212 of the handle 21, the channel 274 of the bush 27, the first mounting hole 251 of the guiding pole 25 in order to movably connect above four members together. At this time, the top and bottom ends of the third elastic piece 28 respectively abut against the bottom surface of the larger diameter portion 271 of the bush 27 and the pin 29, and also the two bulges 213 of the handle 21 respectively abut against the two cam surface 273 of the bush 27. Besides, the second slope 275 of the bush 27 is positioned near or above the second bumps 243 of the first elastic piece 24.

Subsequently, the guiding pole 25 is passed through fourth central hole of the slider 23 and then the slider 23 is slid upwards along the guiding pole 25 to the extent that the first bumps 242 of the first elastic piece 24 are received in recess 232 of the slider 23.

Finally, the guiding pole 25 with its lower end is put into the arched support 2625 of the pedal support 262, and then the guiding pole 25 and the pedal support 262 are fixed together by passing a pivoting piece through the fourth pivoting hole 2626 of the pedal support 262 and the second mounting hole 253 of the guiding pole 25.

### Process for mounting the locking device to the frame assembly

As shown in Figs. 16 and 18, the pin 29 which was passed through the base 22, handle 21, bush 27 and guiding pole 25 is further passed through the two first rods 31 at one end thereof so as to connect the six members together. Next, the two second rods 32 at one end thereof are pivotally connected to the slider 23 respectively at its two second pivoting holes 231 by two pivoting pieces. After that, the pivoting piece which was passed through the pedal assembly 26 and the lower end of the guiding pole 25 is further passed through the two third rods 33 at one end thereof so as to make the four members be connected together. Finally, the other ends of the first rods 31, the second rods 32 and the third rods 33 are pivotally connected with the struts 34 respectively and then the frame assembly 3 in a stretched state as shown in Fig. 18 is completed.

### Operation of the locking device together with the frame assembly

As shown in Fig. 19, when the handle 21 is rotated, the annular portion 211 of the handle 21 can be rotated relative to the base 22 by means of the pin 29 being slid in the flute 212 of the handle 21. Simultaneously, the bulges 213 of the handle 21 are slid on the cam surfaces 273 of the bush 27.

Due to being restricted by the pin 29, the bush 27 cannot be rotated relative to the guiding pole 25, and can only be slid along the guiding pole 25 up or down in a range of the length of the channel 274. Therefore, when the bulges 213 of the handle 21 are slid on the cam surfaces 273 of the bush 27, the bush 27 can be slid up or down along the guiding pole 25 because the cam surfaces 273 around their periphery have different heights

When the bush 27 is slid downwards, not only is the third elastic piece 28 compressed by bottom surface of the larger diameter portion 271 but also the second bumps 243 of the first elastic piece 24 are compressed by the second slope 275 of the bush 27 to the extent that the entire first elastic piece 24, including the first bumps 242 and the second bumps 243, are retracted into the guiding pole 25.

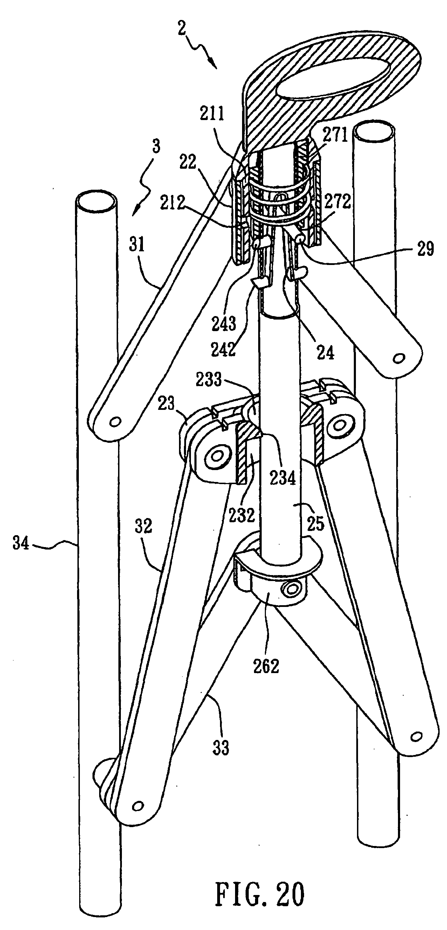

Since the first bumps 242 of the first elastic piece 24 are retracted toward the guiding pole 25, the shoulder 234 of the slider 23 is no longer obstructed by the first bumps 242 and thus the slider 23 can be downwards slid far away from the base 22 along the guiding pole 25 so as to pivotally rotate the rods 31, 32, and 33 of the frame assembly 3 to a collapsed state as shown in Fig. 20. If the applied force is removed from the handle 21, the bush 27 will be replaced upwards by restoration force of the third elastic piece 28 and then the handle 21 can be reversed to its original orientation by the cam surfaces 273 of the bush 27. The handle 21 can also be reversed to its original orientation by the aids of a hand from a user.

In an alternative example of the locking device 2 according to the second preferred embodiment, the handle 21 may be omitted so that the second bumps 243 of the first elastic piece 24 can be retracted into the guiding pole 25 by directly pressing the bush 27.

The second preferred embodiment can also be added with a safety lock in a similar way described in the first preferred embodiment in order to optionally lock the handle 21 and prevent the handle 21 from being carelessly rotated. The handle 21 can be rotated to collapse the frame assembly 3 only if the safety lock is released in advance.

When it is desired to stretch the frame assembly 3 again, the user can hold the struts 34 with his hands and then step on the plate 2622 of the pedal support 262 with his foot. At this time, the slider 23 will be slid upwards along the guiding pole 25. Due to the first slope 233 on top end of the slider 23 and inclining surface on bottom end of the first bumps 242, the slider 23 can easily compress the first bumps 242 into the guiding pole 25 and then be continually slid upwards. After the shoulder 234 of the slider 23 be passed across the first bumps 242, the first bumps 242 are snapped out of the guiding pole 25 and received in the recess 232 of the slider 23 again by restoration force. In this situation, the shoulder 243 is hindered by the first bump 242 so that the frame assembly 3 can be kept in a stretched state as shown in Fig. 18.

This invention has been disclosed in terms of specific embodiments. It will be apparent that many modifications can be made to the disclosed structures without departing from the invention. Therefore, it is the intent of the appended claims to cover all such variations and modifications as come within the breadth and scope of this invention.

## Claims

1. A locking device (1,2) in combination with a frame assembly (3), the frame assembly (3) being provided with a first rod (31), a second rod (32) and a strut (34), one end of the first and the second rod (31, 32) being pivotally connected with the strut (34), the locking device (1,2) comprising:
a base (12, 22) pivotally connected with the other end of the first rod (31);
a slider (13, 23) pivotally connected with the other end of the second rod (32);
a guiding pole (15, 25) partially received within the base (12, 22) and the slider (13, 23);
a handle (11, 21) connected with the guiding pole (15, 25); and
the locking device (1,2) being **characterized in that**
the slider has a shoulder (134, 234) which defines a recess (132, 232);
the locking device (1,2) further comprises a retaining piece (14, 24) partially within the guiding pole (15, 25);
the retaining piece (14, 24) including a first bump (142, 242) protruding out of the guiding pole (15, 25);
the first bump (142, 242) being received in the recess (132, 232) and blocking the slider (13, 23) at the shoulder (134, 234) so as to keep the frame assembly (3) in a stretched state,
whereby, when the handle (11, 21) is operated, the retaining piece (14, 24) is operated and the first bump (142, 242) is released from the shoulder (134, 234) of the slider (13, 23) in order to allow the slider (13, 23) being slid along the guiding pole (15, 25) so as to collapse the frame assembly (3).

2. The locking device in combination with the frame assembly as claimed in claim 1, wherein the guiding pole (15) is rotatable to operate, and the retaining piece (14) is rotated together with the guiding pole (15) when the guiding pole (15) is operated.

3. The locking device in combination with the frame assembly in any previous claim, wherein the slider (13) further has a chase (135) formed adjacent to the shoulder (134) and in spatial communication with the recess (132), whereby the first bump (142) can be removed through the chase (135) from the recess (132).

4. The locking device in combination with the frame assembly in any previous claim, wherein the retaining piece (14, 24) is a first elastic piece (14, 24).

5. The locking device in combination with the frame assembly in any previous claim, wherein the frame assembly (3) is further provided with a third rod (33), and the locking device (1,2) further comprises a pedal assembly (16, 26) which is mounted with the guiding pole (15, 25) and pivotally connected with the third rod (33).

6. The locking device in combination with the frame assembly as claimed in claim 5. wherein the pedal assembly (16) includes a pedal support (162) and a collar (163) rotatably received within the pedal support (162), wherein the third rod (33) is pivotally connected with the pedal support (162) and the guiding pole (15) is fixed to the collar (163).

7. The locking device in combination with the frame assembly as claimed in claim 6, wherein the pedal assembly (16) further includes a second elastic piece (164) which is connected to the guiding pole (15) and the pedal support (162).

8. The locking device in combination with the frame assembly as claimed in claim 6, wherein the pedal assembly (16) further includes a second elastic piece (164) which is used to recover the guiding pole (15) and a plug (165) which is fixed to the pedal support (162).

9. The locking device in combination with the frame assembly as claimed in claim 1 or 2, wherein the locking device (1) further comprises a locking block (19) which is slidablely connected with the guiding pole (15) and thus is optionally engaged with base (12), wherein the locking block (19) can prevent the guiding pole (15) from being rotated relative to the slider (13) when the locking block (19) is engaged with the base (12).

10. The locking device in combination with the frame assembly as claimed in claim 9, wherein the locking device (1) further comprises a slide (17) which is slidably accepted within the handle (11) and is fixed with the locking block (19), wherein the locking block (19) is disengaged from the base (12) when the slide (17) is moved.

11. The locking device in combination with the frame assembly as claimed in claim 10, wherein the locking device (1) further comprises a fourth elastic piece (18) which is mounted with the slide (17) in order to recover the slide (17).

12. The locking device in combination with the frame assembly as claimed in claim 10, wherein the base (12) has a gutter (124, 125) and the locking block (19) has a latch(192, 193), wherein the locking block (19) is engaged with the base (12) when the latch (192, 193) is accommodated within the gutter (124, 125).

13. The locking device in combination with the frame assembly as claimed in claim 1, wherein the locking device (2) further comprises a bush (27) which is slidably connected with the guiding pole (25) and has a cam surface (273), wherein the handle (21) has a bulge (213) which is contacted with the cam surface (273).

14. The locking device in combination with the frame assembly as claimed in claim 13, wherein the bush (27) further has a larger diameter portion (271) on which the cam surface (273) is formed and a smaller diameter portion (272) extending from the larger diameter portion (271),
wherein the retaining piece (24) further includes a second bump (243) which is protruded out of the guiding pole (25) and is positioned adjacent to an end of the smaller diameter portion (272),
wherein when the handle (21) is rotated, the bush (27) is slid along the guiding pole (25) due to cooperation of the bulge (213) and then the second bump (243) is moved into the guiding pole (25) by the bush (27) so as to cooperate the first bump (242) into the guiding pole (25) and thus allow the slider (23) being slid along the guiding pole (25).

15. The locking device in combination with the frame assembly as claimed in Claim 14, wherein the handle (21) has an annular portion (211) and a lateral flute (212) formed on the annular portion (211);
the bush (27) further has a longitudinal channel (274); and
the locking device (2) further comprises a pin (29) which is passed through the base (22), the flute (212), the channel (274) and the guiding pole (25).

16. The locking device in combination with the frame assembly as claimed in claim 14, wherein the locking device (2) further comprises a third elastic piece (28) for recovering the guiding pole (25).

17. The locking device in combination with the frame assembly in any previous claim, wherein the slider (13, 23) further has a first slope (133, 233) on the shoulder (134, 234) and opposite to the recess (132, 232).

18. The locking device in combination with the frame assembly as claimed in claim 13, wherein the bush (27) has a second slope (275) and the retaining piece (24) farther includes a second bump (243) which is adjacent to the second slope (275), whereby when the bush (27) is moved relative to the guiding pole (25), the second bump (243) is pressed by the second slope (275); and
wherein the first bump (242) is cooperated by the second bump (243) and moved into the guiding pole (25) so that the retaining piece (24) is released from the shoulder (234) of the slider (23).

## Patentansprüche

1. Sperrvorrichtung (1, 2) in Kombination mit einer Rahmenanordnung (3), wobei die Rahmenanordnung (3) mit einem ersten Stab (31), einem zweiten Stab (32) und einer Strebe (34) versehen ist, wobei ein Ende der ersten und der zweiten Stäbe (31, 32) schwenkbar mit der Strebe (34) verbunden ist, wobei die Sperrvorrichtung (1, 2) umfasst:
eine Basis (12, 22), die schwenkbar mit dem anderen Ende des ersten Stabs (31) verbunden ist,
einen Gleiter (13, 23), der schwenkbar mit dem anderen Ende des zweiten Stabs (32) verbunden ist,
eine Führungsstange (15, 25), die teilweise in der Basis (12, 22) und dem Gleiter (13, 23) aufgenommen ist,
einen Handhabungsteil (11, 21), der mit der Führungsstange (15, 25) verbunden ist, und
wobei die Sperrvorrichtung (1, 2), **dadurch gekennzeichnet ist, dass:**
der Gleiter eine Schulter (134, 234) aufweist, die eine Vertiefung (132, 232) definiert,
die Sperrvorrichtung (1, 2) weiterhin einen Halteteil (14, 24) teilweise in der Führungsstange (15, 25) umfasst,
der Halteteil (14, 24) einen ersten Buckel (142, 242) umfasst, der von der Führungsstange (15, 25) nach außen vorsteht,
der erste Buckel (142, 242) in der Vertiefung (132, 232) aufgenommen ist und den Gleiter (13, 23) an der Schulter (134, 234) blockiert, um die Rahmenanordnung (3) in einem langgestreckten Zustand zu halten,
wobei, wenn der Handhabungsteil (11, 21) betätigt wird, der Halteteil (14, 24) betätigt wird und der erste Buckel (142, 242) von der Schulter (134, 234) des Gleiters (13, 23) gelöst wird, um zu gestatten, dass der Gleiter (13, 23) entlang der Führungsstange (15, 25) gleitet, um die Rahmenanordnung (3) zusammenzuklappen.

2. Sperrvorrichtung in Kombination mit einer Rahmenanordnung nach Anspruch 1, wobei die Führungsstange (15) für eine Betätigung gedreht werden kann und wobei der Halteteil (14) zusammen mit der Führungsstange (15) gedreht wird, wenn die Führungsstange (15) betätigt wird.

3. Sperrvorrichtung in Kombination mit einer Rahmenanordnung nach einem der vorstehenden Ansprüche, wobei der Gleiter (13) weiterhin eine Rille (135) in Nachbarschaft zu der Schulter (134) und in einer räumlichen Verbindung mit der Vertiefung (132) aufweist, wobei der erste Buckel (142) durch die Rille (135) aus der Vertiefung (132) entfernt werden kann.

4. Sperrvorrichtung in Kombination mit einer Rahmenanordnung nach einem der vorstehenden Ansprüche, wobei der Halteteil (14, 24) ein erster elastischer Teil (14, 24) ist.

5. Sperrvorrichtung in Kombination mit einer Rahmenanordnung nach einem der vorstehenden Ansprüche, wobei die Rahmenanordnung (3) weiterhin mit einem dritten Stab (33) versehen ist und die Sperrvorrichtung (1, 2) weiterhin eine Pedalanordnung (16, 26) umfasst, die an der Führungsstange (15, 25) montiert ist und schwenkbar mit dem dritten Stab (33) verbunden ist.

6. Sperrvorrichtung in Kombination mit einer Rahmenanordnung nach Anspruch 5, wobei die Pedalanordnung (16) eine Pedalstütze (162) und eine drehbar in der Pedalstütze (162) aufgenommene Manschette (163) enthält, wobei der dritte Stab (33) schwenkbar mit der Pedalstütze (162) verbunden ist und die Führungsstange (15) an der Manschette (163) fixiert ist.

7. Sperrvorrichtung in Kombination mit einer Rahmenanordnung nach Anspruch 6, wobei die Pedalanordnung (16) weiterhin einen zweiten elastischen Teil (164) enthält, der mit der Führungsstange (15) und der Pedalstütze (162) verbunden ist.

8. Sperrvorrichtung in Kombination mit einer Rahmenanordnung nach Anspruch 6, wobei die Pedalanordnung (16) weiterhin einen zweiten elastischen Teil (164) enthält, der verwendet wird, um die Führungsstange (15) und einen an der Pedalstütze (162) fixierten Zapfen (165) zurückzustellen.

9. Sperrvorrichtung in Kombination mit einer Rahmenanordnung nach Anspruch 1 oder 2, wobei die Sperrvorrichtung (1) weiterhin einen Sperrblock (19) umfasst, der gleitbar mit der Führungsstange (15) verbunden ist und somit optional in die Basis (12) eingreift, wobei der Sperrblock (19) eine Drehung der Führungsstange (15) relativ zu dem Gleiter (13) verhindern kann, wenn der Sperrblock (19) in die Basis (12) eingreift.

10. Sperrvorrichtung in Kombination mit einer Rahmenanordnung nach Anspruch 9, wobei die Sperrvorrichtung (1) weiterhin einen Gleiter (17) umfasst, der gleitbar in dem Handhabungsteil (11) aufgenommen ist und an dem Sperrblock (19) fixiert ist, wobei der Sperrblock (19) von der Basis (12) gelöst wird, wenn der Gleiter (17) bewegt wird.

11. Sperrvorrichtung in Kombination mit einer Rahmenanordnung nach Anspruch 10, wobei die Sperrvorrichtung (1) weiterhin einen vierten elastischen Teil (18) umfasst, der an dem Gleiter (17) montiert ist, um den Gleiter (17) zurückzustellen.

12. Sperrvorrichtung in Kombination mit einer Rahmenanordnung nach Anspruch 10, wobei die Basis (12) eine Rinne (124, 125) aufweist und der Sperrblock (19) eine Klinke (192, 193) aufweist, wobei der Sperrblock (19) in die Basis (12) eingreift, wenn die Klinke (192, 193) in der Rinne (124, 125) aufgenommen ist.

13. Sperrvorrichtung in Kombination mit einer Rahmenanordnung nach Anspruch 1, wobei die Sperrvorrichtung (2) weiterhin eine Buchse (27) umfasst, die gleitbar mit der Führungsstange (25) verbunden ist und eine Nockenfläche (273) aufweist, wobei der Handhabungsteil (21) eine Wölbung (213) aufweist, die in einen Kontakt mit der Nockenfläche (273) gebracht wird.

14. Sperrvorrichtung in Kombination mit einer Rahmenanordnung nach Anspruch 13, wobei die Buchse (27) weiterhin einen Teil (271) mit einem größeren Durchmesser, an dem die Nockenfläche (273) ausgebildet ist, und einen Teil (272) mit einem kleineren Durchmesser, der sich von dem Teil (271) mit einem größeren Durchmesser erstreckt, aufweist,
wobei der Halteteil (24) weiterhin einen zweiten Buckel (243) umfasst, der von der Führungsstange (25) nach außen vorsteht und in Nachbarschaft zu einem Ende des Teils (272) mit einem kleineren Durchmesser angeordnet ist,
wobei, wenn der Handhabungsteil (21) gedreht wird, die Buchse (27) aufgrund einer Mitbetätigung der Wölbung (213) entlang der Führungsstange (25) gleitet und dann der zweite Buckel (243) durch die Buchse (27) in die Führungsstange (25) bewegt wird, um den ersten Buckel (242) mitzubetätigen und in die Führungsstange (25) zu bewegen, sodass der Gleiter (23) entlang der Führungsstange (25) gleiten kann.

15. Sperrvorrichtung in Kombination mit einer Rahmenanordnung nach Anspruch 14, wobei die Handhabungsvorrichtung (21) einen ringförmigen Teil (211) und eine an dem ringförmigen Teil (211) ausgebildete laterale Furche (212) aufweist,
die Buchse (27) weiterhin einen Längskanal (274) aufweist, und
die Sperrvorrichtung (2) weiterhin einen Stift (29) aufweist, der sich durch die Basis (22), die Furche (212), den Kanal (274) und die Führungsstange (25) erstreckt.

16. Sperrvorrichtung in Kombination mit einer Rahmenanordnung nach Anspruch 14, wobei die Sperrvorrichtung (2) weiterhin einen dritten elastischen Teil (28) zum Zurückstellen der Führungsstange (25) umfasst.

17. Sperrvorrichtung in Kombination mit einer Rahmenanordnung nach einem der vorstehenden Ansprüche, wobei der Gleiter (13, 23) weiterhin eine erste Schräge (133, 233) an der Schulter (134, 234) und gegenüber der Vertiefung (132, 232) aufweist.

18. Sperrvorrichtung in Kombination mit einer Rahmenanordnung nach Anspruch 13, wobei die Buchse (27) eine zweite Schräge (275) aufweist und der Halteteil (24) weiterhin einen zweiten Buckel (243) in Nachbarschaft zu der zweiten Schräge (275) umfasst, wobei, wenn die Buchse (27) relativ zu der Führungsstange (25) bewegt wird, der zweite Buckel (243) durch die zweite Schräge (275) gedrückt wird, und
wobei der erste Buckel (242) durch den zweiten Buckel (243) mitbetätigt und in die Führungsstange (25) bewegt wird, sodass der Halteteil (24) von der Schulter (234) des Gleiters (23) gelöst wird.

## Revendications

1. Dispositif de verrouillage (1, 2) en combinaison avec un ensemble d'armature (3), l'ensemble d'armature (3) étant pourvu d'une première tige (31), d'une deuxième tige (32) et d'un montant (34), une extrémité des première et deuxième tiges (31, 32) étant connectée de manière pivotante au montant (34), le dispositif de verrouillage (1, 2) comprenant :
une base (12, 22) connectée de manière pivotante à l'autre extrémité de la première tige (31) ;
un coulisseau (13, 23) connecté de manière pivotante à l'autre extrémité de la deuxième tige (32) ;
une barre de guidage (15, 25) partiellement reçue dans la base (12, 22) et le coulisseau (13, 23) ;
une poignée (11, 21) connectée à la barre de guidage (15, 25) ; et
dans lequel le dispositif de verrouillage (1, 2) est **caractérisé en ce que**
le coulisseau comporte un épaulement (134, 234) qui définit un logement (132, 232) ;
le dispositif de verrouillage (1, 2) comprend en outre une pièce de rétention (14, 24) partiellement dans la barre de guidage (15, 25) ;
la pièce de rétention (14, 24) comprend une première protubérance (142, 242) qui ressort de la barre de guidage (15, 25) ;
la première protubérance (142, 242) est reçue dans le logement (132, 232) et bloque le coulisseau (13, 23) à l'épaulement (134, 234) de manière à maintenir l'ensemble d'armature (3) dans un état allongé,
moyennant quoi, quand la poignée (11, 21) est actionnée, la pièce de rétention (14, 24) est actionnée et la première protubérance (142, 242) est libérée de l'épaulement (134, 234) du coulisseau (13, 23) pour permettre au coulisseau (13, 23) de glisser le long de la barre de guidage (15, 25) de manière à replier l'ensemble d'armature (3).

2. Dispositif de verrouillage en combinaison avec l'ensemble d'armature selon la revendication 1, dans lequel la barre de guidage (15) peut être actionnée en rotation, et la pièce de rétention (14) est tournée conjointement à la barre de guidage (15) quand la barre de guidage (15) est actionnée.

3. Dispositif de verrouillage en combinaison avec l'ensemble d'armature selon l'une quelconque des revendications précédentes, dans lequel le coulisseau (13) comporte en outre un siège (135) formé de manière adjacente à l'épaulement (134) et en communication spatiale avec le logement (132), moyennant quoi la première protubérance (142) peut être ôtée du logement (132) à travers le siège (135).

4. Dispositif de verrouillage en combinaison avec l'ensemble d'armature selon l'une quelconque des revendications précédentes, dans lequel la pièce de rétention (14, 24) est une première pièce élastique (14, 24) .

5. Dispositif de verrouillage en combinaison avec l'ensemble d'armature selon l'une quelconque des revendications précédentes, dans lequel l'ensemble d'armature (3) est en outre pourvu d'une troisième tige (33), et le dispositif de verrouillage (1, 2) comprend en outre un ensemble de pédale (16, 26) qui est monté avec la barre de guidage (15, 25) et connecté de manière pivotante à la troisième tige (33).

6. Dispositif de verrouillage en combinaison avec l'ensemble d'armature selon la revendication 5, dans lequel l'ensemble de pédale (16) comprend un support de pédale (162) et un collier (163) reçu de manière rotative dans le support de pédale (162), dans lequel la troisième tige (33) est connectée de manière pivotante au support de pédale (162) et la barre de guidage (15) est fixée au collier (163).

7. Dispositif de verrouillage en combinaison avec l'ensemble d'armature selon la revendication 6, dans lequel l'ensemble de pédale (16) comprend en outre une deuxième pièce élastique (164) qui est connectée à la barre de guidage (15) et au support de pédale (162).

8. Dispositif de verrouillage en combinaison avec l'ensemble d'armature selon la revendication 6, dans lequel l'ensemble de pédale (16) comprend en outre une deuxième pièce élastique (164) qui est utilisée pour recouvrir la barre de guidage (15) et un bouchon (165) qui est fixé au support de pédale (162).

9. Dispositif de verrouillage en combinaison avec l'ensemble d'armature selon la revendication 1 ou 2, dans lequel le dispositif de verrouillage (1) comprend en outre un bloc de verrouillage (19) qui est connecté de manière coulissante à la barre de guidage (15) et est donc éventuellement engagé avec la base (12), dans lequel le bloc de verrouillage (19) peut éviter à la barre de guidage (15) d'être tournée par rapport au coulisseau (13) quand le bloc de verrouillage (19) est engagé avec la base (12).

10. Dispositif de verrouillage en combinaison avec l'ensemble d'armature selon la revendication 9, dans lequel le dispositif de verrouillage (1) comprend en outre une coulisse (17) qui est reçue de manière coulissante dans la poignée (11) et est fixée au bloc de verrouillage (19), dans lequel le bloc de verrouillage (19) est désengagé de la base (12) quand la coulisse (17) est déplacée.

11. Dispositif de verrouillage en combinaison avec l'ensemble d'armature selon la revendication 10, dans lequel le dispositif de verrouillage (1) comprend en outre une quatrième pièce élastique (18) qui est montée avec la coulisse (17) de manière à recouvrir la coulisse (17).

12. Dispositif de verrouillage en combinaison avec l'ensemble d'armature selon la revendication 10, dans lequel la base (12) comporte une gouttière (124, 125) et le bloc de verrouillage (19) comporte un pêne (192, 193), dans lequel le bloc de verrouillage (19) est engagé avec la base (12) quand le pêne (192, 193) est logé dans la gouttière (124, 125).

13. Dispositif de verrouillage en combinaison avec l'ensemble d'armature selon la revendication 1, dans lequel le dispositif de verrouillage (2) comprend en outre une douille (27) qui est connectée de manière coulissante à la barre de guidage (25) et présente une surface de came (273), dans lequel la poignée (21) comporte un bombement (213) qui est mis en contact avec la surface de came (273).

14. Dispositif de verrouillage en combinaison avec l'ensemble d'armature selon la revendication 13,
dans lequel la douille (27) comporte en outre une partie de plus grand diamètre (271) sur laquelle la surface de came (273) est formée et une partie de plus petit diamètre (272) qui s'étend depuis la partie de plus grand diamètre (271),
dans lequel la pièce de rétention (24) comprend en outre une deuxième protubérance (243) qui ressort de la barre de guidage (25) et se trouve en position adjacente à une extrémité de la partie de plus petit diamètre (272),
dans lequel, quand la poignée (21) est tournée, la douille (27) est glissée le long de la barre de guidage (25) du fait de l'engagement du bombement (213), et la deuxième protubérance (243) est ensuite déplacée dans la barre de guidage (25) par la douille (27) de manière à engager la première protubérance (242) dans la barre de guidage (25) et à permettre ainsi au coulisseau (23) de coulisser le long de la barre de guidage (25).

15. Dispositif de verrouillage en combinaison avec l'ensemble d'armature selon la revendication 14, dans lequel
la poignée (21) comporte une partie annulaire (211) et une cannelure latérale (212) formée sur la partie annulaire (211) ;
la douille (27) comporte en outre un canal longitudinal (274) ; et
le dispositif de verrouillage (2) comprend en outre une broche (29) qui traverse la base (22), la cannelure (212), le canal (274) et la barre de guidage (25).

16. Dispositif de verrouillage en combinaison avec l'ensemble d'armature selon la revendication 14, dans lequel le dispositif de verrouillage (2) comprend en outre une troisième pièce élastique (28) pour recouvrir la barre de guidage (25).

17. Dispositif de verrouillage en combinaison avec l'ensemble d'armature selon l'une quelconque des revendications précédentes, dans lequel le coulisseau (13, 23) comporte en outre une première pente (133, 233) sur l'épaulement (134, 234) et opposée au logement (132, 232).

18. Dispositif de verrouillage en combinaison avec l'ensemble d'armature selon la revendication 13,
dans lequel la douille (27) comporte une deuxième pente (275) et la pièce de rétention (24) comprend en outre une deuxième protubérance (243) adjacente à la deuxième pente (275), moyennant quoi, quand la douille (27) est déplacée par rapport à la barre de guidage (25), la deuxième protubérance (243) est poussée par la deuxième pente (275) ; et
dans lequel la première protubérance (242) est engagée avec la deuxième protubérance (243) et déplacée dans la barre de guidage (25) de telle sorte que la pièce de rétention (24) est libérée de l'épaulement (234) du coulisseau (23).
